# EUROPÄISCHE PATENTSCHRIFT

(11) **EP 3 272 509 B1**
(45) Veröffentlichungstag und Bekanntmachung des Hinweises auf die Patenterteilung: **24.02.2021**
(21) Anmeldenummer: 17171643.4
(22) Anmeldetag: 18.05.2017
(51) Int. Cl.: B29D 30/06, B60C 11/12, B29C 33/10

(54) **VULKANISATIONSFORM UND FAHRZEUGLUFTREIFEN**
VULCANISATION MOULD AND PNEUMATIC TYRE FOR A VEHICLE
MOULE DE VULCANISATION ET PNEU DE VÉHICULE

(30) Priorität: 21.07.2016 DE 102016213332
(43) Veröffentlichungstag der Anmeldung: 24.01.2018
(73) Patentinhaber: Continental Reifen Deutschland GmbH, 30165 Hannover (DE)
(72) Erfinder: Schlittenhard, Jan, 30900 Wedemark (DE); Lange, Holger, 30171 Hannover (DE); Seng, Matthias, 30453 Hannover (DE)
(74) Vertreter: Finger, Karsten

(56) Entgegenhaltungen:
- EP-A1- 2 689 920
- WO-A1-2016/109037
- DE-A1-102009 017 127
- DE-A1-102010 016 906
- DE-A1-102011 055 662
- DE-A1-102013 225 298
- DE-A1-102014 216 868

## Beschreibung

Die Erfindung betrifft eine Vulkanisationsform für einen Fahrzeugluftreifen mit Formteilen, die den profilierten Laufstreifen des Reifens ausformen und im Laufstreifen Einschnitte bildende Lamellenbleche aufweisen, wobei an zumindest einer Seite zumindest eines Lamellenbleches zumindest eine in den Formteil hinein verlaufende, im Querschnitt kreisförmige Entlüftungsbohrung ausgebildet ist, welche einen Durchmesser von 0,05 mm bis 0,15 mm aufweist.

Die Erfindung betrifft ferner einen Fahrzeugluftreifen, welche in einer Vulkanisationsform gemäß der Erfindung vulkanisiert worden ist.

Beim Einformen eines Reifenrohlings in eine Vulkanisationsform wird in der Vulkanisationsform vorhandene Luft zwischen dieser und dem Reifenrohling eingeschlossen und muss daher abgeführt werden. Zu diesem Zweck ist es üblich, in der Vulkanisationsform eine Vielzahl von Entlüftungsbohrungen mit einem Durchmesser von 3 mm bis 5 mm vorzusehen, welche ein Abführen der eingeschlossenen Luft gestatten. Die Entlüftungsbohrungen bilden bei der Vulkanisation kleine Erhebungen an der Oberfläche des Laufstreifens aus. Werden in den Entlüftungsbohrungen Entlüftungseinheiten mit Ventilen eingesetzt, die bei eingeformtem Reifenrohling die Entlüftungsbohrungen verschließen, wird das Ausbilden von ausgeprägten Erhebungen am Laufstreifen weitgehend verhindert.

Eine Vulkanisationsform der eingangs genannten Art ist beispielsweise aus der DE 10 2014 216 868 A1 bekannt. Die Vulkanisationsform weist als Mikrobohrungen bezeichnete Entlüftungsbohrungen mit einem Durchmesser von 30 µm bis 100 µm (0,03 mm bis 0,1 mm) auf.

Aus der DE 10 2009 017 127 A1 ist ebenfalls eine Vulkanisationsform mit Formteilen bekannt, in welchen Entlüftungsbohrungen ausgebildet sind. Diese befinden sich am Fußpunkt von Rillen ausformenden Profilstegen und unmittelbar bei zwischen den Profilstegen verlaufenden Lamellenblechen. An jeder Seite der Lamellenbleche sind jeweils zwei Entlüftungsbohrungen vorgesehen. In jeder Entlüftungsbohrung ist ein Entlüftungsstift eingebracht, sodass der Querschnitt der Entlüftungsbohrungen durch den Entlüftungsstift verengt ist.

Die DE 10 2010 016 906 A1 offenbart einen Fahrzeugluftreifen mit einem Laufstreifen mit Einschnitten, welche an zumindest einer Stelle durch eine lochartige Öffnung verbreitert sind. Der sich beim Fahren auf schneebedeckter Fahrbahn in diesen Öffnungen ansammelnde Schnee soll über den Effekt der Schnee-Schnee-Reibung die Schneegriffeigenschaften des Fahrzeugluftreifens verbessern.

Die im Laufstreifen durch Entlüftungsbohrungen gebildeten kleinen Erhebungen sind vor allem bei Reifen, die unter winterlichen Fahrbedingungen, also auf Eis oder Schnee, gefahren werden, nachteilig, da sie die Nettokontaktfläche des Laufstreifens reduzieren, über welche Reibung, insbesondere auf Eis, übertragen wird.

Der Erfindung liegt daher die Aufgabe zugrunde, eine Vulkanisationsform der eingangs genannten Art derart zu gestalten, dass eine sichere Formentlüftung gewährleistet ist, wobei die Griffeigenschaften auf Schnee und/oder Eis bei neuem Reifen durch eine Reduktion der Fläche der Erhebungen, die von den Entlüftungsbohrungen stammen, verbessert sind.

Die gestellte Aufgabe wird erfindungsgemäß dadurch gelöst, dass der als minimaler Abstand ermittelte Abstand zwischen dem Mittelpunkt der Entlüftungsbohrung und dem Lamellenblech 0,07 mm bis 1,0 mm beträgt.

Vorzugsweise sind an zumindest einer Seite des Lamellenbleches mindestens zwei, insbesondere mindestens drei, Entlüftungsbohrungen ausgebildet.

Gemäß der Erfindung ist daher in unmittelbarer Nähe sowie an zumindest einer Seite von Lamellenblechen zumindest eine Entlüftungsbohrung mit sehr kleinem Querschnitt im Formteil ausgebildet, welche die Entlüftung der Vulkanisationsform im heiklen Bereich des Lamellenbleches sicherstellt. Dadurch lässt sich gegenüber einer herkömmlichen Ausführung von Entlüftungsbohrungen die Gesamtfläche von durch Entlüftungsbohrungen ausgebildeten Erhebungen im Laufstreifen deutlich reduzieren. Die Entlüftungsbohrungen gemäß der Erfindung hinterlassen am Laufstreifen ausgesprochen kleine und niedrige Erhebungen, sodass die Nettokontaktfläche des Laufstreifens und damit die Winterfahreigenschaften bei neuem Reifen kaum beeinträchtigt werden. Die sehr nah an den Lamellenblechen positionierten winzigen Entlüftungsbohrungen entlüften besonders effektiv.

Die Entlüftungsbohrungen gemäß der Erfindung können in einer größeren Anzahl vorgesehen werden und weisen vor allem in diesem Fall vorzugsweise einen Durchmesser von bis zu 0,08 mm auf.

Für eine gute Entlüftungswirkung ist es ferner günstig, wenn jede Entlüftungsbohrung in einen insbesondere ebenfalls als Bohrung ausgeführten Entlüftungskanal mündet, welcher eine größere Querschnittsfläche als die Entlüftungsbohrung aufweist sowie vorzugsweise und über zumindest den Großteil seiner Erstreckung einen Durchmesser von 3,0 mm bis 5,0 mm aufweist.

Bei einer bevorzugten Ausführungsform der Erfindung ist vorgesehen, dass jeweils eine größere Anzahl von Entlüftungsbohrungen an einer Seite des Lamellenbleches vorgesehen ist, wobei diese vorteilhafterweise gleich große Abstände zueinander aufweisen.

Die Entlüftungswirkung der winzigen Entlüftungsbohrungen wird gemäß einer weiteren Ausführungsvariante der Erfindung dann unterstützt, wenn das Lamellenblech in unmittelbarer Nähe der Formsegmentinnenseite zumindest eine Durchgangsbohrung mit einem Durchmesser von 0,3 mm bis 1,0 mm aufweist. Dabei ist es vorteilhaft, wenn der Normalabstand des Mittelpunktes jeder Durchgangsbohrung von der Innenseite des Formteiles höchstens 1,5 mm beträgt und wenn das Lamellenblech bei jeder der winzigen Entlüftungsbohrungen mit einer Durchgangsbohrung versehen ist.

Erfindungsgemäß ausgeführte Vulkanisationsformen weisen üblicherweise eine Vielzahl von Einschnitten im Laufstreifen ausformenden Lamellenblechen auf. Bei einer möglichen Ausführungsform ist dabei an jeder Seite dieser Lamellenbleche mindestens eine, vorzugsweise sind mehrere Entlüftungsbohrung(en) vorgesehen. Diese Ausführung wird vor allem bei nicht laufrichtungsgebundenen Laufstreifen gewählt. Ist eine Vulkanisationsform mit einer Vielzahl von Einschnitten ausformenden Lamellenblechen zum Ausformen von laufrichtungsgebundenen Laufstreifen vorgesehen, ist es vorteilhaft, wenn nur an einer Seite von Lamellenblechen, bei diesen Lamellenblechen jedoch an der gleichen Seite, jeweils mindestens eine Entlüftungsbohrung vorgesehen ist. Die im Laufstreifen dadurch gebildeten winzigen Erhebungen in der Nähe der ein- oder auslaufenden Einschnittkanten, je nach Ausführung, können nun bestimmte Winterfahreigenschaften positiv beeinflussen.

Bei Vulkanisationsformen mit wellenförmig ausgestalteten Lamellenblechen, die in Draufsicht wellenförmig verlaufende Einschnitte im Laufstreifen ausformen, ist es vorteilhaft, Entlüftungsbohrungen im Bereich der Täler der Wellenform der Lamellenbleche auszubilden. Die derart im Laufstreifen des neuen Reifens vorhandenen winzigen Erhebungen bewirken bei einer Verformung der Profilpositive durch Traktions- oder Bremskräfte eine gewisse Vergleichmäßigung des Druckes im Bereich der Einschnittkante.

Die Erfindung betrifft ferner einen Fahrzeugluftreifen, welcher einen profilierten Laufstreifen mit Einschnitten aufweist und in einer erfindungsgemäß ausgeführten Vulkanisationsform vulkanisiert worden ist. Ein derartiger Fahrzeugluftreifen weist bei zumindest einer Einschnittkante seiner Einschnitte zumindest eine in Draufsicht kreisförmige Erhebung mit einem Durchmesser von 0,05 mm bis 0,15 mm und einer Höhe von 0,1 mm bis 0,2 mm auf, wobei der als minimaler Abstand ermittelte Abstand zwischen dem Mittelpunkt der kreisförmigen Erhebungen und den Einschnittkanten 0,07 mm bis 1,0 mm beträgt. Diese winzigen Erhebungen haben bei neuem Reifen positive

Auswirkungen auf die Winterfahreigenschaften, beispielsweise die Bremseigenschaften, ferner auf Schneetraktion und Eistraktion. Bei einem laufrichtungsgebunden gestalteten Laufstreifen können diese winzigen Erhebungen gezielt an einlaufenden oder auslaufenden Einschnittkanten ausgebildet sein, sodass die erwähnten Eigenschaften, ja nach der Position der Einschnitte am Laufstreifen, auf besonders wirksame Weise beeinflusst werden können.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 einen vereinfachten Querschnitt durch einen Teilbereich eines Formteiles einer Vulkanisationsform für einen Fahrzeugluftreifen mit einer Ausführungsvariante der Erfindung und
Fig. 2 bis Fig. 6 Draufsichten auf Profilblöcke eines Laufstreifens eines Fahrzeugluftreifens, welche in Vulkanisationsformen gemäß der Erfindung vulkanisiert worden sind.

Vulkanisationsformen für Fahrzeugluftreifen für PKW weisen üblicherweise Seitenwandschalen, welche die Seitenwände des Reifens ausformen, und sieben bis dreizehn den Laufstreifenbereich des Reifens formende Formteile auf. Zur Vulkanisation wird der fertig aufgebaute Reifenrohling in die Vulkanisationsform eingebracht und in diese in bekannter Weise eingeformt. Beim Einformen wird die zwischen der Vulkanisationsform und dem Reifenrohling eingeschlossene Luft durch Entlüftungseinrichtungen in der Vulkanisationsform abgeführt und der Reifenrohling anschließend vulkanisiert.

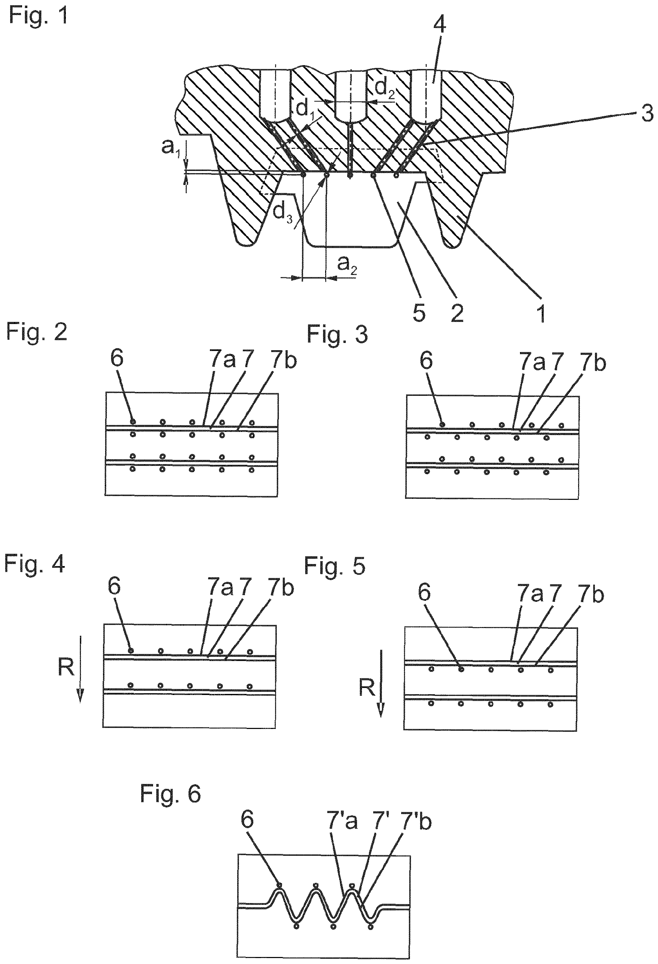

Fig. 1 zeigt einen Teilbereich eines den Laufstreifen formenden Formteiles mit zwei Profilstegen 1, welche an der Innenseite des Formteiles ausgebildet sind und bei der Vulkanisation Rillen im Laufstreifen formen. An der Formteilinnenseite ist zwischen den beiden Profilstegen 1 ein Lamellenblech 2 verankert, welches bei der Vulkanisation einen Einschnitt im Laufstreifen formt.

Zur Entlüftung der Vulkanisationsform im Bereich der Lamellenbleche 2 sind Entlüftungsbohrungen 3 vorgesehen, welche in unmittelbarer Nähe der Lamellenbleche 2 von der den Laufstreifen ausformenden Formteilinnenseite gerade in den Formteil hineinverlaufen und innerhalb des Formteiles in zur Formteilaußenseite führende, vorzugsweise ebenfalls als Bohrungen ausgeführte Entlüftungskanäle 4 einmünden. Entlang zumindest einer Seite des Lamellenbleches 2 sind vorzugsweise mindestens drei, bei der in Fig. 1 gezeigten Variante fünf, im Querschnitt kreisförmige Entlüftungsbohrungen 3 vorgesehen, welche jeweils einen Durchmesser d₁ von 0,05 mm bis 0,15 mm, insbesondere von bis zu 0,08 mm, aufweisen. An der Formteilinnenseite weisen die Entlüftungsbohrungen 3 vom Bohrungsmittelpunkt zum Lamellenblech 2 jeweils einen Normalabstand bzw. einen als Minimalabstand ermittelten Abstand von 0,5 mm bis 1,0 mm auf. Die Entlüftungsbohrungen 3 sind entlang der Formteilinnenseite in einer Reihe sowie gleichmäßig verteilt zwischen den beiden Profilstegen 1 angeordnet, sodass benachbarte Entlüftungsbohrungen 3 an der Formteilinnenseite vorzugsweise im Wesentlichen gleich große Abstände aufweisen.

Die Entlüftungskanäle 4 weisen zumindest über den Großteil ihrer Erstreckung einen konstanten Durchmesser d₂ von 3,0 mm bis 5,0 mm auf, wobei bei der in Fig. 1 gezeigten Ausführungsvariante im Bereich radial innerhalb des Lamellenbleches 2 drei nebeneinander verlaufende Entlüftungskanäle 4 vorgesehen sind.

Von den fünf in Fig. 1 vorgesehenen Entlüftungsbohrungen 3 verläuft die mittlere Entlüftungsbohrung 3 im Wesentlichen senkrecht in den Formteil hinein und mündet in den mittleren Entlüftungskanal 4. Von den weiteren vier Entlüftungsbohrung 3 verlaufen die beiden jeweils nebeneinander liegenden Entlüftungsbohrungen 3 im Wesentlichen parallel zueinander sowie unter einem spitzen Winkel in den Formteil hinein und münden jeweils gemeinsam in einen der beiden weiteren Entlüftungskanäle 4.

Am fertigen Reifen hinterlassen die Entlüftungsbohrungen 3 auf den Profilpositiven des Laufstreifens in unmittelbarer Nähe der Einschnittkanten der von den Lamellenblechen gebildeten Einschnitte niedrige, beispielsweise etwa 0,1 mm bis 0,2 mm hohe Erhebungen 6 (Fig. 2 bis Fig. 6).

Bei der in Fig. 1 gezeigten Ausführung sind ferner im Lamellenblech 2 unmittelbar bei der Formteilinnenseite fünf Durchgangsbohrungen 5 ausgebildet, welche zur Formteilinnenseite einen jeweils vom Mittelpunkt der Durchgangsbohrung 5 ermittelten Normalabstand a₁ von höchstens 1,0 mm aufweisen. Die Durchgangsbohrungen 5 befinden sich vorzugsweise bei den Entlüftungsbohrungen 3 und weisen einen Durchmesser d₃ von 0,3 mm bis 1,0 mm auf. Insbesondere bei nur an einer Seite der Lamellenbleche 2 ausgebildeten Entlüftungsbohrungen 3 tragen die Durchgangsbohrungen 5 zu einer effektiveren Luftabfuhr bei.

Fig. 2 bis Fig. 6 zeigen Draufsichten auf sehr vereinfacht dargestellte Profilblöcke, welche zu einem Laufstreifen gehören, der in einer Vulkanisationsform mit Entlüftungsbohrungen 3 bei Lamellenblechen vulkanisiert worden ist. Fig. 4 und Fig. 5 sind Ausführungsvarianten von Profilblöcken in laufrichtungsgebunden ausgeführten Laustreifen, sodass die Abrollrichtung des Reifens bei Vorwärtsfahrt durch einen Pfeil R gekennzeichnet ist. Die Profilblöcke in den Fig. 2 bis 5 weisen zwei, jeweils von einem Lamellenblech gebildete Einschnitte 7 mit einer konstanten Breite von 0,3 mm bis 0,8 mm auf, die bei den dargestellten vereinfachten Ausführungen den jeweiligen Profilblock durchqueren sowie gerade und parallel zueinander verlaufen. Der in Fig. 6 gezeigte Profilblock weist beispielhaft nur einen einzigen, in Draufsicht wellenförmigen Einschnitt 7' auf. Die Einschnitte 7, 7' erstrecken sich bei den gezeigten Varianten in Querrichtung des Laufstreifens, sie können sich jedoch auch unter spitzen Winkel zur Laufstreifenquerrichtung verlaufen und in Draufsicht zickzackförmig, treppenförmig und dergleichen gestaltet sein.

Bei den in Fig. 2 und Fig. 3 gezeigten Profilblöcken sind von Entlüftungsbohrungen, die beidseitig der die Einschnitte 7 ausformenden Lamellenbleche im Formteil vorgesehen sind, entlang jeder Einschnittkante 7a, 7b jeweils fünf Erhebungen 6 ausgebildet worden, welche in Fig. 2 einander paarweise, durch den jeweiligen Einschnitt 7 getrennt, gegenüberliegen. Bei der in Fig. 3 gezeigten Variante sind die entlang der einen Einschnittkante 7a verlaufenden Erhebungen 6 gegenüber den entlang der anderen Einschnittkante 7b verlaufenden Erhebungen 6 in Laufstreifenquerrichtung versetzt.

Bei den in Fig. 4 und Fig. 5 gezeigten Profilblöcken weist jeder Einschnitt 7 infolge der Laufrichtungsgebundenheit des Laufstreifens jeweils eine bei Vorwärtsfahrt zuerst in die Bodenaufstandsfläche eintretende, einlaufende Einschnittkante 7a sowie eine auslaufende Einschnittkante 7b auf. Von Entlüftungsbohrungen 3, die nur an einer Seite der die Einschnitte 7 ausformenden Lamellenbleche im Formteil ausgebildet sind, sind in Fig. 4 entlang der auslaufenden Einschnittkante 7b, in Fig. 5 entlang der einlaufenden Einschnittkante 7a beispielhaft jeweils fünf Erhebungen 6 ausgebildet worden. Bei neuem Reifen bewirken gemäß Fig. 4 ausgebildete Erhebungen 6 eine Verbesserung der Schneetraktion und der Bremseigenschaften auf Eis, gemäß Fig. 5 ausgebildete Erhebungen 6 eine Verbesserung der Eistraktion und der Bremseigenschaften auf Schnee.

Bei dem in Fig. 6 gezeigte Profilblock mit einem wellenförmigen Einschnitt 7' ist im Bereich der Täler der Wellenform der Einschnittkanten 7'a, 7'b durch an entsprechenden Positionen vorgesehene Entlüftungsbohrungen beim formenden Lamellenblech jeweils eine Erhebung 6 ausgebildet. Bei einer Verformung des Profilblockes durch Traktions- oder Bremskräfte findet eine gewisse Vergleichmäßigung des Druckes bei den Einschnittkanten 7'a, 7'b statt, da die Erhebungen 6 bei den Tälern der Wellenform den geringeren Anpressdruck im Bereich der Täler ausgleichen.

### Bezugsziffernliste

- 1: Profilsteg
- 2: Lamellenblech
- 3: Entlüftungsbohrung
- 4: Entlüftungskanal
- 5: Durchgangsbohrung
- 6: Erhebung
- 7, 7': Einschnitt
- 7a, 7'a': auslaufende Einschnittkante
- 7b, 7'b: einlaufende Einschnittkante
- a₁: Abstand
- d₁, d₂, d₃: Durchmesser
- R: Abrollrichtung

## Patentansprüche

1. Vulkanisationsform für einen Fahrzeugluftreifen mit Formteilen, die den profilierten Laufstreifen des Reifens ausformen und im Laufstreifen Einschnitte (7, 7') bildende Lamellenbleche (2) aufweisen, wobei an zumindest einer Seite zumindest eines Lamellenbleches (2) zumindest eine in den Formteil hinein verlaufende, im Querschnitt kreisförmige Entlüftungsbohrung (3) ausgebildet ist, welche einen Durchmesser (d₁) von 0,05 mm bis 0,15 mm aufweist,
**dadurch gekennzeichnet,**
**dass** der als minimaler Abstand ermittelte Abstand zwischen dem Mittelpunkt der Entlüftungsbohrung (3) und dem Lamellenblech (2) 0,07 mm bis 1,0 mm beträgt.

2. Vulkanisationsform nach Anspruch 1, **dadurch gekennzeichnet, dass** der Durchmesser (d₁) der Entlüftungsbohrung (3) bis zu 0,08 mm beträgt.

3. Vulkanisationsform nach Anspruch 1 oder 2, **dadurch gekennzeichnet, dass** an zumindest einer Seite des Lamellenbleches (2) mindestens zwei, insbesondere mindestens drei, Entlüftungsbohrungen (3) ausgebildet sind.

4. Vulkanisationsform nach einem der Ansprüche 1 bis 3, **dadurch gekennzeichnet, dass** jede Entlüftungsbohrung (3) in einen insbesondere ebenfalls als Bohrung ausgeführten Entlüftungskanal (4, 4') mündet, welcher eine größere Querschnittsfläche als die Entlüftungsbohrung sowie vorzugsweise und zumindest über den Großteil seiner Erstreckung einen Durchmesser (d₂) von 3,0 mm bis 5,0 mm aufweist.

5. Vulkanisationsform nach einem der Ansprüche 1 bis 4, **dadurch gekennzeichnet, dass** die an einer Seite des Lamellenbleches (2) vorgesehen Entlüftungsbohrungen (3) gleich große Abstände (a₂) zueinander aufweisen.

6. Vulkanisationsform nach einem der Ansprüche 1 bis 5, **dadurch gekennzeichnet, dass** das Lamellenblech (2) in unmittelbarer Nähe der Formsegmentinnenseite zumindest eine Durchgangsbohrung (5) mit einem Durchmesser (d₃) von 0,3 mm bis 1,0 mm aufweist.

7. Vulkanisationsform nach Anspruch 6, **dadurch gekennzeichnet, dass** der Normalabstand (a₁) des Mittelpunktes der Durchgangsbohrung (5) von der Innenseite des Formteiles höchstens 1,5 mm beträgt.

8. Vulkanisationsform nach Anspruch 6 oder 7, **dadurch gekennzeichnet, dass** das Lamellenblech (2) bei jeder Entlüftungsbohrung (3) eine Durchgangsbohrung (5) aufweist.

9. Vulkanisationsform nach einem der Ansprüche 1 bis 8, mit einer Vielzahl von Einschnitte im Laustreifen ausformenden Lamellenblechen, **dadurch gekennzeichnet, dass** an jeder Seite der Lamellenbleche mindestens eine Entlüftungsbohrung (3) vorgesehen ist.

10. Vulkanisationsform nach einem der Ansprüche 1 bis 8, welche einen Fahrzeugluftreifen mit einem laufrichtungsgebundenen Laufstreifen formt und mit einer Vielzahl von Einschnitte ausformenden Lamellenblechen versehen ist, **dadurch gekennzeichnet, dass** Lamellenbleche vorgesehen sind, bei welchen nur an ihrer einen Seite, und zwar an der gleichen Seite, jeweils mindestens eine Entlüftungsbohrung (3) vorgesehen ist.

11. Vulkanisationsform nach Anspruch 9 oder 10, mit wellenförmig ausgestalteten Lamellenblechen, **dadurch gekennzeichnet, dass** die Entlüftungsbohrungen (3) im Bereich der Täler der Wellenform ausgebildet sind.

12. Fahrzeugluftreifen, welcher einen profilierten Laufstreifen mit Einschnitten (7, 7') aufweist und in einer Vulkanisationsform gemäß einem der Ansprüche 1 bis 11 vulkanisiert worden ist, **dadurch gekennzeichnet, dass** bei zumindest einer Einschnittkante (7a, 7'a, 7b, 7'b) der Einschnitte (7, 7') zumindest eine in Draufsicht kreisförmige Erhebung (6) mit einem Durchmesser von 0,05 mm bis 0,15 mm und einer Höhe von 0,1 mm bis 0,2 mm ausgebildet ist, wobei der als minimaler Abstand ermittelte Abstand zwischen dem Mittelpunkt der kreisförmigen Erhebungen (6) und den Einschnittkanten (7a, 7'a, 7b, 7'b) 0,07 mm bis 1,0 mm beträgt.

13. Fahrzeugluftreifen nach Ansprüche 13, mit einem laufrichtungsgebunden gestalteten Laufstreifen, **dadurch gekennzeichnet, dass** Einschnitte (7) vorhanden sind, bei welchen entweder nur entlang der einlaufenden oder nur entlang der auslaufenden Einschnittkante (7a, 7b) zumindest eine Erhebung (6) ausgebildet ist.

## Claims

1. Vulcanizing mould for a pneumatic vehicle tyre with mould parts which form the profiled tread of the tyre and which have sipe blades (2) which form sipes (7, 7') in the tread, wherein, at at least one side of at least one sipe blade (2), there is formed at least one ventilation bore (3) which runs into the mould part and which is of circular cross section and which has a diameter (d₁) of 0.05 mm to 0.15 mm, **characterized**
**in that** the spacing, determined as minimum spacing, between the centrepoint of the ventilation bore (3) and the sipe blade (2) is 0.07 mm to 1.0 mm.

2. Vulcanizing mould according to Claim 1, **characterized in that** the diameter (d₁) of the ventilation bore (3) is up to 0.08 mm.

3. Vulcanizing mould according to Claim 1 or 2, **characterized in that**, at at least one side of the sipe blade (2), there are formed at least two, in particular at least three, ventilation bores (3).

4. Vulcanizing mould according to any of Claims 1 to 3, **characterized in that** each ventilation bore (3) opens into a ventilation channel (4, 4') which is in particular likewise formed as a bore and has a larger cross-sectional area than the ventilation bore and preferably has, at least over the major part of its extent, a diameter (d₂) of 3.0 mm to 5.0 mm.

5. Vulcanizing mould according to any of Claims 1 to 4, **characterized in that** the ventilation bores (3) provided at one side of the sipe blade (2) have equal spacings (a₂) to one another.

6. Vulcanizing mould according to any of Claims 1 to 5, **characterized in that** the sipe blade (2) has, in the immediate vicinity of the mould segment inner side, at least one passage bore (5) with a diameter (d₃) of 0.3 mm to 1.0 mm.

7. Vulcanizing mould according to Claim 6, **characterized in that** the normal spacing (a₁) of the centrepoint of the passage bore (5) from the inner side of the mould part is at most 1.5 mm.

8. Vulcanizing mould according to Claim 6 or 7, **characterized in that** the sipe blade (2) has a passage bore (5) at each ventilation bore (3).

9. Vulcanizing mould according to any of Claims 1 to 8, having a multiplicity of sipe blades which form sipes in the tread, **characterized in that** at least one ventilation bore (3) is provided at each side of the sipe blades.

10. Vulcanizing mould according to any of Claims 1 to 8, which forms a pneumatic vehicle tyre with a directional tread and which is equipped with a multiplicity of sipe blades which form sipes, **characterized in that** sipe blades are provided in the case of which, only at one side thereof, specifically at the same side, there is provided in each case at least one ventilation bore (3).

11. Vulcanizing mould according to Claim 9 or 10, having sipe blades of undulating form, **characterized in that** the ventilation bores (3) are formed in the region of the troughs of the undulating shape.

12. Pneumatic vehicle tyre which has a profiled tread with sipes (7, 7') and which has been vulcanized in a vulcanizing mould according to any of Claims 1 to 11, **characterized in that**, at at least one sipe edge (7a, 7'a, 7b, 7'b) of the sipes (7, 7'), there is formed at least one elevation (6) which is circular in plan view and which has a diameter of 0.05 mm to 0.15 mm and a height of 0.1 mm to 0.2 mm, wherein the spacing, determined as minimum spacing, between the centrepoint of the circular elevations (6) and the sipe edges (7a, 7'a, 7b, 7'b) is 0.07 mm to 1.0 mm.

13. Pneumatic vehicle tyre according to Claim 13, having a directional tread, **characterized in that** sipes (7) are provided in the case of which at least one elevation (6) is formed either only along the leading or only along the trailing sipe edge (7a, 7b) .

## Revendications

1. Moule de vulcanisation pour un pneumatique de véhicule, comprenant des parties de moule qui façonnent la bande de roulement profilée du pneumatique et présentent des tôles lamellaires (2) formant des entailles (7, 7') dans la bande de roulement, dans lequel au moins un perçage de purge (3) de section transversale circulaire, s'étendant à l'intérieur de la partie de moule et qui présente un diamètre (d₁) de 0,05 mm à 0,15 mm est réalisé sur au moins un côté d'au moins une tôle lamellaire (2),
**caractérisé en ce que** la distance entre le centre du perçage de purge (3) et la tôle lamellaire (2), déterminée comme étant la distance minimale, mesure de 0,07 mm à 1,0 mm.

2. Moule de vulcanisation selon la revendication 1, **caractérisé en ce que** le diamètre (d₁) du perçage de purge (3) mesure jusqu'à 0,08 mm.

3. Moule de vulcanisation selon la revendication 1 ou 2, **caractérisé en ce qu'**au moins deux, en particulier au moins trois, perçages de purge (3) sont réalisés sur au moins un côté de la tôle lamellaire (2).

4. Moule de vulcanisation selon l'une quelconque des revendications 1 à 3, **caractérisé en ce que** chaque perçage de purge (3) débouche sur un canal de purge (4, 4'), en particulier réalisé également sous forme de perçage, qui présente une superficie de la section supérieure à celle du perçage de purge, ainsi que de préférence et au moins sur une majeure partie de son étendue un diamètre (d₂) de 3,0 mm à 5,0 mm.

5. Moule de vulcanisation selon l'une quelconque des revendications 1 à 4, **caractérisé en ce que** les perçages de purge (3) prévus sur un côté de la tôle lamellaire (2) présentent des distances (a₂) de même dimension les uns par rapport aux autres.

6. Moule de vulcanisation selon l'une quelconque des revendications 1 à 5, **caractérisé en ce que** la tôle lamellaire (2) présente à proximité immédiate du côté intérieur de segment de moule au moins un perçage traversant (5) ayant un diamètre (d₃) de 0,3 mm à 1,0 mm.

7. Moule de vulcanisation selon la revendication 6, **caractérisé en ce que** la distance normale (a₁) du centre du perçage traversant (5) par rapport au côté intérieur de la partie de moule mesure au plus 1,5 mm.

8. Moule de vulcanisation selon la revendication 6 ou 7, **caractérisé en ce que** la tôle lamellaire (2) présente un perçage traversant (5) à chaque perçage de purge (3).

9. Moule de vulcanisation selon l'une quelconque des revendications 1 à 8, comprenant une pluralité de tôles lamellaires façonnant des entailles dans la bande de roulement, **caractérisé en ce qu'**au moins un perçage de purge (3) est prévu de chaque côté des tôles lamellaires.

10. Moule de vulcanisation selon l'une quelconque des revendications 1 à 8, qui forme un pneumatique de véhicule doté d'une bande de roulement tenant compte du sens de la marche et est muni d'une pluralité de tôles lamellaires façonnant des entailles dans la bande de roulement, dans lequel respectivement au moins un perçage de purge (3) est prévu sur un seul de ses côtés, notamment sur le même côté.

11. Moule de vulcanisation selon la revendication 9 ou 10, comprenant des tôles lamellaires de configuration ondulée, **caractérisé en ce que** les perçages de purge (3) sont réalisés au niveau des creux de la forme ondulée.

12. Pneumatique de véhicule, qui présente une bande de roulement profilée dotée d'entailles (7, 7') et qui a été vulcanisé dans un moule de vulcanisation selon l'une quelconque des revendications 1 à 11, **caractérisé en ce que** pour au moins un bord d'entaille (7a, 7'a, 7b, 7'b) des entailles (7, 7'), au moins un relief (6) circulaire en vue de dessus est réalisé avec un diamètre de 0,05 mm à 0,15 mm et une hauteur de 0,1 mm à 0,2 mm, la distance entre le centre des reliefs circulaires (6) et les bords d'entaille (7a, 7'a, 7b, 7'b), déterminée comme étant la distance minimale, mesure de 0,07 mm à 1,0 mm.

13. Pneumatique de véhicule selon la revendication 13, comprenant une bande de roulement configurée en tenant compte du sens de la marche, **caractérisé en ce que** des entailles (7) sont présentes sur lesquelles au moins un relief (6) est réalisé, soit uniquement le long du bord d'entaille entrant, soit uniquement le long du bord d'entaille sortant (7a, 7b).
